# EUROPEAN PATENT SPECIFICATION

(11) **EP 1 650 993 B1**
(45) Date of publication and mention of the grant of the patent: **10.10.2007**
(21) Application number: 04024875.9
(22) Date of filing: 19.10.2004
(51) Int. Cl.: H04Q 7/32, H04L 12/56, H04L 12/28

(54) **Power-saving method for a wlan station**
Energiesparverfahren für eine WLAN-Station
Procédé d'économie d'énergie dans une station WLAN

(43) Date of publication of application: 26.04.2006
(73) Proprietor: Inventec Appliances Corp., Wugu Shiang Taipei Hsien (TW)
(72) Inventor: Wu, Chiung-hsien, Wugu Shiang, Taipei Hsien (TW); Chang, Ju-Nan, Wugu Shiang, Taipei Hsien (TW)
(74) Representative: Schaeberle, Steffen

(56) References cited:
- WO-A-20/04077763
- US-A- 6 018 642
- "IEEE 802.11 First Edition 1999: Information Technology; Telecommunications and information exchange between systems; Local and metropolitan area networks; Specific requirements; Part 11: Wireless LAN Medium Access Control (MAC) and Physical Layer (PHY) specifications; PAGES 133-136" ISO/IEC 8802-11 ANSI/IEEE STD 802.11, 20 August 1999 (1999-08-20), pages 133-136, XP002298630

## Description

The present invention relates to a power-saving method and a wireless communication system according to the preamble of claims 1 and 12, respectively.

Because a Wireless Local Area Network (WLAN) is increasingly popular, the IEEE 802.11 WLAN standard is made for compatibility of systems. The purpose of the IEEE 802.11 standard is to make a protocol for the WLAN operating environment, which focuses on constructing the MAC (Medium Access Control) layer and the physical layer.

A network system complying with IEEE 802.11 specifications comprises a server, a plurality of access points, and a plurality of stations. Each of the stations and access points can send and receive wireless signals to transmit data. Each of the access points is separately connected to the server so that data can be exchanged between the access point and server. The server is used to relay signal transmissions among the access points. One station can exchange data with another station by using the access point and server to relay the signals.

Transmission between the station and the access point is a power-consuming behavior. When the station is transmitting a packet, the receiving station is in an active mode, and when the transmitting station is not sending any packet, the receiving station is in a power saving mode. According to the 802.11 standard, a packet can be divided into several fragments to improve the performance. When the first fragment is sent, the receiving station keeps operating in the active mode until the last fragment is received. There is a period of buffering time between every two transmitted fragments. During this period, no fragment is being sent, but power is still consumed by the receiving station. The period of buffering time is mainly caused by the time when the previous fragment is waiting for the next fragment and the network access delay. The network access delay is due to contention-based protocol of 802.11 standard. The longer the buffering time, the more power a receiving station consumes.

This in mind, the present invention aims at providing a power-saving device and method applied in a wireless communication system having reduced power consumption.

This is achieved by a power-saving method according to claim 1 and by a wireless communication system according to claim 12. The respective dependent claims pertain to corresponding further developments and improvements.

As will be seen more clearly from the detailed description following below, the claimed power-saving method and wireless communication system include a station sending a plurality of periodical fragments to an access point and the access point sending a plurality of fragments to the station during an interval that is between a first beacon and a second beacon adjacent to the first beacon. The station receives the plurality of fragments at different time points after receiving the first beacon. The receiving station sets a MORE DATA BIT as enabled or disabled according to a duration between the first beacon and a received fragment. If a period between the first beacon and a fragment of the plurality of fragments received by the station after the first beacon is smaller than a predetermined time, the MORE DATA BIT is set as enabled and the station is in an active mode. If a period between the first beacon and a fragment of the plurality of fragments received by the station after the first beacon is not smaller than a predetermined time, the MORE DATA BIT is set as disabled and the station is in a power saving mode.

In the following, the invention is further illustrated by way of example, taking references to the accompanying drawings. Thereof
Fig. 1 illustrates a block diagram of a wireless network system.
Fig.2 illustrates an example in which the fragments are may be sent.
Fig.3 illustrates the queuing method that an access point utilizes to send a plurality of fragments to a station in a wireless communication system.
Fig.4 illustrates a flowchart of the power-saving method for wireless communication system according to the present invention.
Fig.5 illustrates a station switching to the power saving mode.
Fig.6 illustrates a wireless communication system according to the present invention.

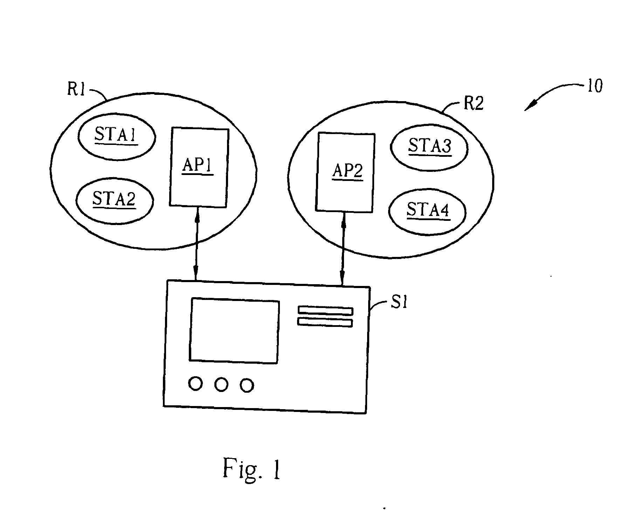

Please refer to Fig.1, which illustrates a block diagram of a wireless network system 10. The network system 10 complies with IEEE 802.11 specifications. The network system 10 comprises a server S1, a plurality of access points (two representative access points AP1 and AP2 are shown in Fig.1), and a plurality of stations (four representative stations STA1, STA2, STA3, and STA4 are indicated in Fig.1). The stations STA1 to STA4 and access points AP1 and AP2 all provide functionality for connecting to the wireless network 10. In other words, each of the stations and access points can send and receive wireless signals to transmit data. All transmitted data complies with a unified network protocol. Each of the access points AP1 and AP2 is separately connected to the server S1 so that data can be exchanged between the access point and server S1. Generally, when a station transmits wireless signals (such as radio waves or infrared radiation) to an access point, the effective transmission range is limited. An area R1, marked by a dotted line in Fig. 1, is representative of the area within which the access point AP1 and the stations STA1 and STA2 can effectively exchange wireless signals. Outside the area R1, the wireless signals transmitted from the access point AP1, station STA1, and station STA2 cannot be adequately received. Similarly, an area R2 is representative of the area within which the access point AP2, station STA3, and station STA4 can effectively exchange wireless signals. In order to expand the effective range of the stations in the wireless network 10, the server S1 is used to relay signal transmissions among the access points. One station can exchange data with another station by using the access point and server to relay the signals. Under this allocation scheme, not only can the wireless functionality of the stations be retained, but also the accessing range of the wireless network system 10 is further extended.

As previously stated, transmission between the station STA1 and the access point AP1 is a power-consuming behavior. When the station STA1 is transmitting a packet, the station STA1 is in an active mode, and when the station STA1 is not sending any packet, the station STA1 is in a power saving mode. According to the 802. 11 standard, a packet can be divided into several fragments to improve the performance. When the first fragment is sent, the receiving station STA1 keeps operating in the active mode until the last fragment is received. During this period, the station STA1 consumes power.

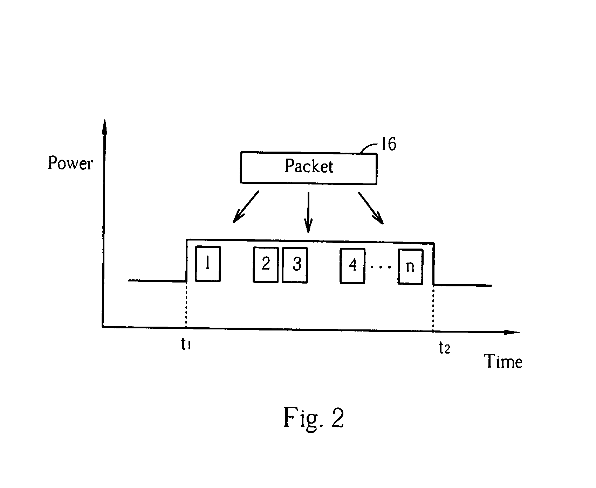

Please refer to Fig.2. Fig.2 illustrates one possible situation in which the fragments are sent. The packet 16 is divided into n fragments. The first fragment is sent at t1 and the last fragment is sent at t2 when the transmission of all the fragments is completed. There is a period of buffering time between every two transmitted fragments. During this period, no fragment is being sent, but power is still consumed. The period of buffering time is mainly caused by the time when the previous fragment is waiting for the next fragment and the network access delay. The network access delay is due to contention-based protocol of 802. 11 standard.

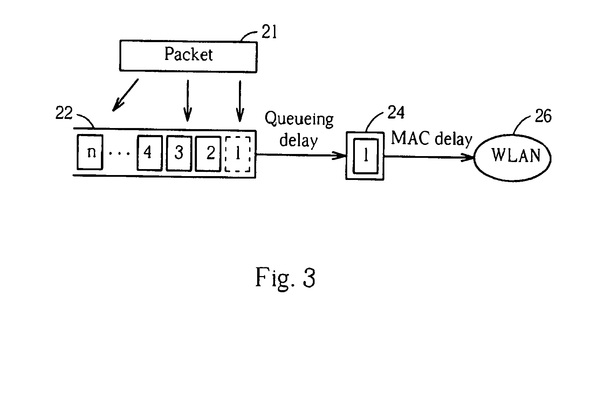

Please refer to Fig. 3, which illustrates a queuing method that an access point utilizes to send a plurality of fragments to a station in a wireless communication system. A packet 21 is sent to a receiving station through the WLAN 26. As mentioned before, a packet is divided into several fragments according to the 802.11 standard. Therefore, the packet 21 is divided into n fragments, illustrated in Fig.3 as the fragments marked with numbers 1 to n. The n fragments wait to be sent to a single-packet MAC buffer according to the sequence of the queue 22. The fragment No. 1 is sent to the single packet MAC buffer 24 first, and then is sent to the WLAN 26 from the single packet MAC buffer 24 to reach the station. During the transmission, the system undergoes two delays. One is queuing delay and the other is MAC delay. The delays involve the time interval taken for each sent fragment to arrive at a destination station.

The wireless communication system of the present invention belongs to the 802.11 standard. When one station of the wireless communication system sends a packet, the station is in the active mode. Otherwise, the station enters a power saving mode if no packets are being sent. Operating in the power saving mode means operating in a low power mode for the purpose of decreasing power consumption. When an access point communicates with a station of the wireless communication system, the access point will keep sending periodic beacons to the station. Because these beacons have a constant period, there is a constant time interval between each two beacons. In order to receive the periodic beacons, the station in the power saving mode must switch to the active mode before it is going to receive the beacon. The timing that the station switches from the power saving mode to the active mode is controlled by the synchronization between the station and the access point.

When an access point delivers a packet to a station, a signal of MORE DATA BIT will also be delivered. If MORE DATA BIT is set as Enable, it means plenty of packets are waiting to be transmitted. Therefore, the station is informed to be in the active mode. On the other hand, if MORE DATA BIT is set as Disable, the station is going to enter a power saving mode.

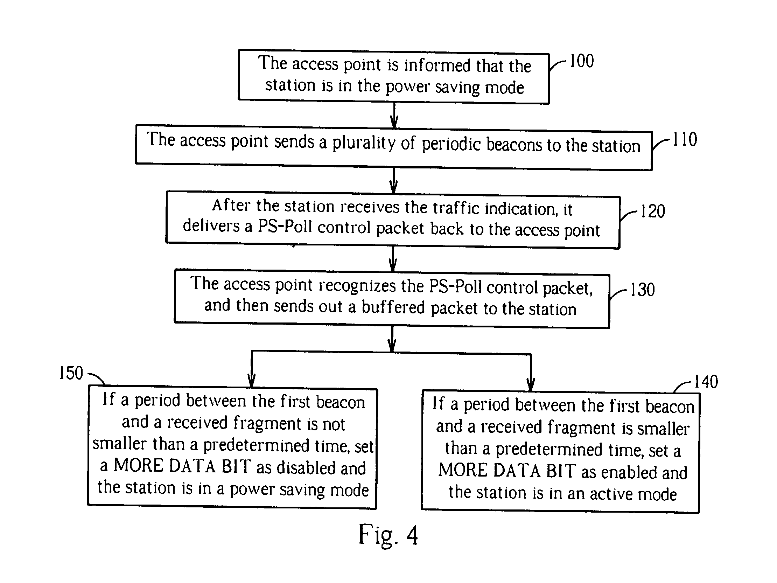

Please refer to Fig.4, which illustrates a flowchart of the power-saving method for a wireless communication system according to the present invention. The flowchart describes how an access point sends a packet to a station in a power saving mode. In the step 100, the access point is informed that the station is in the power saving mode. In the step 110, the access point sends a plurality of periodic beacons to the station. If a plurality of fragments are going to be sent to the station, a nearest beacon (expressed as the first beacon here) sends a traffic indication to the station. In the step 120, after the station receives the traffic indication, it delivers a PS-Poll control packet back to the access point. In the step 130, the access point recognizes the PS-Poll control packet, and then sends out a buffered packet to the station. In the step 140, the station will receive a plurality of fragments at different time points. If a period between the first beacon and a received fragment is smaller than a predetermined time, the MORE DATA BIT is set as enabled and the station is in an active mode. Similarly, in the step 150, if a period between the first beacon and a received fragment is not smaller than a predetermined time, the MORE DATA BIT is set as disabled and the station is in a power saving mode. The sequence of the method in Fig.4 can be changed according to different applications.

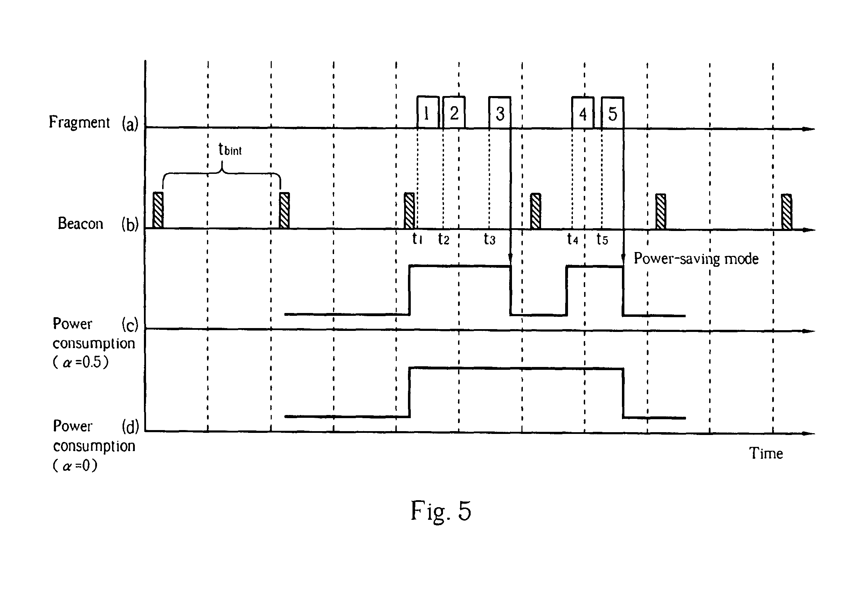

To describe step 140 and step 150 of Fig.4 in greater detail, please refer to Fig.5 that illustrates a preferred embodiment showing how a present invention station switches to the power saving mode. There are four sub-charts, (a), (b), (c), and (d) in Fig.5. The horizontal axis of four sub-charts represents time. The chart (a) represents 5 fragments reaching the station at different time points. For example, the fragment 1 arrives at t1, the fragment 2 arrives at t2, the fragment 3 arrives at t3, the fragment 4 arrives at t4, and the fragment 5 arrives at t5. The chart (b) represents the station receiving a plurality of periodic beacons at different time points and the interval between each two adjacent beacons is t_{bint}. The vertical axis of chart (c) and chart (d) represent power consumption. Charts (c) and (d) represent power consumption of a station under different values of a parameter α ( the meaning of the parameter α will be described later).

In the present invention, the way to determine when a station enters power saving mode is according to the following equation: tᵢ-t_{beacon} < t_{bint}* (1-α), where 1≥α≥0, tᵢ is the time at which each fragment arrives at the station, t_{beacon} is the time when the station receives a plurality of beacons, and t_{bint} is the interval between each two adjacent beacons. The parameter α is used for determining the predetermined time in steps 140 and 150 in Fig.4. Thus, tᵢ-t_{beacon} is a period between the time point when the station receives a fragment and the time point when the station receives the previous beacon. If the equation is satisfied, the MORE DATA BIT is set to be enabled and the station is in the active mode. If the equation is not satisfied, the MORE DATA BIT is set to be disabled and the station is in the power saving mode.

Take Fig.5 as an example, t_{bint} = 200ms, t1-t_{beacon} = 15ms, t2-t_{beacon} = 70ms, t3-t_{beacon} = 140ms, t4-t_{beacon} = 70ms, t5-t_{beacon} = 120ms. If α is 0.5, t_{bint}* (1-α) - 100ms. Therefore, the station starts to operate at t1, and enters the power saving mode at t3. After time point t4, the station enters the active mode and it enters the power saving mode again after t5. In a special case, ifα is set to be zero, the equation is always satisfied. Therefore, the station is in the active mode between each two received packets.

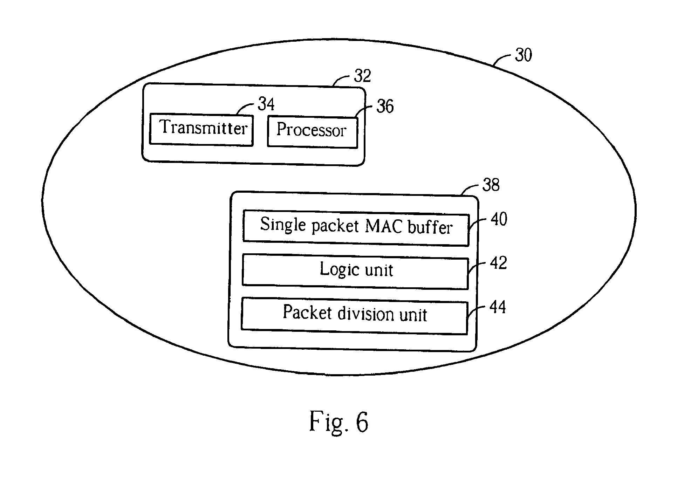

Please refer to Fig.6, which illustrates a wireless communication system 30 having a power-saving function according to the present invention. The wireless communication system 30 comprises an access point 38 and a station 32. The access point 38 comprises a transmitter 34 and a processor 26. The access point 38 further comprises a single packet MAC buffer 40, a logic unit 42, and a packet division unit 44. The wireless communication system 30 is the apparatus that can implement the method of Fig.4. The access point 38 is used to send a plurality of periodic beacons and send a plurality of fragments between two successive periodic beacons. The packet division unit 44 is used for dividing a packet into a plurality of fragments and sending the plurality of fragments sequentially to the single packet MAC buffer 40. The fragments stored in the single packet MAC buffer 40 are waiting to be sent to the station 32 by the access point 38.

When the access point 38 is informed that the station 32 is in the power saving mode, it sends a traffic indication to the station 32 through a beacon. After the station 32 receives the traffic indication, the transmitter 34 sends back a PS-Poll control packet to the access point 38. The logic unit 42 in the access point 38 recognizes the PS-Poll control packet and then the access point 38 sends a buffer packet to the station 32. The station will receive a plurality of fragments at different time points. The processor 36 is used to set a MORE DATA BIT as enabled and the station 32 is in an active mode if a period between the received fragment and the beacon immediately prior to the received fragment is smaller than a predetermined time. The processor 36 sets a MORE DATA BIT as disabled and the station 32 is in a power saving mode if a period between the received fragment and the beacon immediately prior to the received fragment is not smaller than a predetermined time.

In the prior art, during the buffering time between each transmitted fragment, the receiving station is in the active mode, in which the station consumes power. Moreover, the longer the buffering time is, the more power a station consumes, leading to extra power waste.

In contrast, the claimed power-saving device and method can save power during the buffering time. In a power-saving method for a station used in a WLAN, the station receives a plurality of fragments from an access point and the access point sends out a plurality of beacons with a fixed period. When the station receives each fragment from the access point at different time points, it is determined if the station is set to a power saving mode by comparing the time difference of the received fragment and the beacon immediately prior to the fragment with a predetermined time. If a period between the received fragment and the beacon immediately before the received fragment is smaller than a predetermined time, the station enters the active mode. If a period between the received fragment and the beacon immediately before the received fragment is not smaller than a predetermined time, the station enters the power saving mode. Because the station will not waste power in the power-saving method, the method and the wireless communication system of the present invention have the advantage of low power consumption.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A power-saving method for a station (STA1, STA2, STA3, STA4, 32) used in a wireless local area network (10, 26, 30) includes an access point (AP1, AP2, 38) sending a plurality of fragments (1 to n) in which a packet has been divided to the station (STA1, STA2, STA3, STA4, 32) during an interval which is between a first beacon (b) and a second beacon (b) adjacent to the first beacon (b), wherein the beacons (b) are sent from the access point to the station, the station (32) receiving the plurality of fragments (1 to n) at different time points after receiving the first beacon (b), the power-saving method is **characterized by**:
if a period between the first beacon (b) and a fragment of the plurality of fragments (1 to n) received by the station (STA1, STA2, STA3, STA4, 32) after the first beacon (b) is smaller than a predetermined time, setting a MORE DATA BIT as enabled and the station (STA1, STA2, STA3, STA4, 32) is in an active mode (140); and
if a period between the first beacon (b) and a fragment of the plurality of fragments (1 to n) received by the station (STA1, STA2, STA3, STA4, 32) after the first beacon (b) is not smaller than a predetermined time, setting the MORE DATA BIT as disabled and the station (STA1, STA2, STA3, STA4, 32) is in a power saving mode (150).

2. The power-saving method of claim 1 further **characterized by** informing the access point (AP1, AP2, 38) that the station (STA1, STA2, STA3, STA4, 32) is in the power saving mode.

3. The power-saving method of claim 1 further **characterized by** the access point (AP1, AP2, 38) delivering a traffic indication (120) to the station (STA1, STA2, STA3, STA4, 32) through the first beacon (b).

4. The power-saving method of claim 1 further **characterized by** the station (STA1, STA2, STA3, STA4, 32) delivering a Power Serve-Poll (PS-Poll) control packet (130) to the access point (AP1, AP2, 38).

5. The power-saving method of claim 4 further **characterized by** the access point (AP1, AP2, 38) recognizing the Power Serve-Poll (PS-Poll) control packet and sending a buffer packet (130) to the station (STA1, STA2, STA3, STA4, 32).

6. The power-saving method of claim 1 further **characterized by** dividing a packet (21) into the plurality of fragments (1 to n).

7. The power-saving method of claim 6 further **characterized by** sending the plurality of fragments (1 to n) to a single-packet Medium Access Control (MAC) buffer (40).

8. The power-saving method of claim 7 further **characterized by** sending the plurality of fragments (1 to n) to a WLAN (26) from the single-packet Medium Access Control (MAC) buffer (40).

9. The power-saving method of claim 1 further **characterized by** the plurality of fragments (1 to n) comprising sound information.

10. The power-saving method of claim 1 further **characterized by** the wireless communication system (10, 26, 30) being wireless IP phone.

11. The power-saving method of claim 1 further **characterized by** a ratio of the predetermined time to the interval between the first beacon (b) and the second beacon (b) is between 0 and 1 inclusive.

12. A wireless communication system (10, 26, 30) with a power-saving function, the wireless communication system (10, 26, 30) comprising:
an access point (AP1, AP2, 38) for sending a plurality of periodic beacons (b)and sending a plurality of fragments (1 to n) in which a packet has been divided during an interval between a first beacon (b) and a second beacon (b)adjacent to the first beacon (b), the first beacon (b) comprising a traffic indication; and
a station (STA1, STA2, STA3, STA4, 32) used in a wireless local area network for receiving the first beacon (b) and receiving the plurality of fragments (1 to n) at different time points after the first beacon (b) is received, the station (STA1, STA2, STA3, STA4, 32) is
**characterized by**
a processor (36) for setting a MORE DATA BIT as enabled and the station (STA1, STA2, STA3, STA4, 32) is in an active mode if a period between the first beacon (b) and a fragment of the plurality of fragments (1 to n) received by the station (STA1, STA2, STA3, STA4, 32) after the first beacon (b) is smaller than a predetermined time (140), and setting a MORE DATA BIT as disabled and the station (STA1, STA2, STA3, STA4, 32) is in a power saving mode if a period between the first beacon (b)and a fragment of the plurality of fragments (1 to n) received by the station (STA1, STA2, STA3, STA4, 32) after the first beacon is not smaller than the predetermined time (150).

13. The wireless communication system (10, 26, 30) of claim 12 further **characterized in that** the station (STA1, STA2, STA3, STA4, 32) further comprises a transmitter (34) for sending a Power Serve-Poll (PS-Poll) control packet (120) to the access point (AP1, AP2, 38).

14. The wireless communication system (10, 26, 30) of claim 13 further **characterized in that** the access point (AP1, AP2, 38) further comprises a logic unit (42) for recognizing the Power Serve-Poll (PS-Poll) control packet (130).

15. The wireless communication system (10, 26, 30) of claim 13 further **characterized in that** the access point (AP1, AP2, 38) is further used for sending a buffer packet (130).

16. The wireless communication system (10, 26, 30) of claim 12 further **characterized in that** the access point (AP1, AP2, 38) further comprises a packet division unit (44) for dividing a packet (21) into the plurality of fragments (1 to n).

17. The wireless communication system (10, 26, 30) of claim 16 further **characterized in that** the access point (AP1, AP2, 38) further comprises a single-packet Medium Access Control (MAC) buffer (40) for storing the plurality of fragments (1 to n).

## Patentansprüche

1. Energiesparverfahren für eine Station (STA1, STA2, STA3, STA4, 32), die in einem drahtlosen lokalen Netzwerk (10, 26, 30) verwendet wird, mit einem Zugangspunkt (AP1, AP2, 38), der eine Vielzahl von Fragmente (1 bis n), in welche ein Paket unterteilt wurde, während eines Intervalls zwischen einem ersten Signalfeuer (b) und einem zweiten Signalfeuer (b) angrenzend an das erste Signalfeuer (b) an die Station (STA1, STA2, STA3, STA4, 32) sendet, wobei die Signalfeuer (b) vom Zugangspunkt zur Station gesandt werden, wobei die Station (32) die Vielzahl von Fragmente (1 bis n) zu verschiedenen Zeitpunkten nach dem Empfang des ersten Signalfeuers (b) empfängt, wobei das Energiesparverfahren **gekennzeichnet ist durch**:
Setzen eines MORE DATA BIT als aktiv und die Station (STA1, STA2, STA3, STA4, 32) befindet sich in einem aktiven Modus (140), wenn ein Zeitraum zwischen dem ersten Signalfeuer (b) und einem Fragment der Vielzahl von Fragmente (1 bis n), das von der Station (STA1, STA2, STA3, STA4, 32) nach dem ersten Signalfeuer (b) empfangen wird, kürzer als ein vorbestimmter Zeitraum ist; und
Setzen eines MORE DATA BIT als inaktiv und die Station (STA1, STA2, STA3, STA4, 32) befindet sich in einem Energiesparmodus (150), wenn ein Zeitraum zwischen dem ersten Signalfeuer (b) und einem Fragment der Vielzahl von Fragmente (1 bis n), das von der Station (STA1, STA2, STA3, STA4, 32) nach dem ersten Signalfeuer (b) empfangen wird, nicht kürzer als ein vorbestimmter Zeitraum ist.

2. Energiesparverfahren nach Anspruch 1, ferner **gekennzeichnet durch** Informieren des Zugangspunkts (AP1, AP2, 38) darüber, dass sich die Station (STA1, STA2, STA3, STA4, 32) im Energiesparmodus befindet.

3. Energiesparverfahren nach Anspruch 1, ferner **dadurch gekennzeichnet, dass** der Zugangspunkt (AP1, AP2, 38) eine Angabe über den Verkehr (120) an die Station (STA1, STA2, STA3, STA4, 32) über das erste Signalfeuer (b) liefert.

4. Energiesparverfahren nach Anspruch 1, ferner **dadurch gekennzeichnet, dass** die Station (STA1, STA2, STA3, STA4, 32) ein Steuerpaket (130) Power Serve-Poll (PS-Poll) an den Zugangspunkt (AP1, AP2, 38) liefert.

5. Energiesparverfahren nach Anspruch 4, ferner **dadurch gekennzeichnet, dass** der Zugangspunkt (AP1, AP2, 38) das Steuerpaket Power Serve-Poll (PS-Poll) erkennt und ein Zwischenspeicherpaket (130) an die Station (STA1, STA2, STA3, STA4, 32) sendet.

6. Energiesparverfahren nach Anspruch 1, ferner **gekennzeichnet durch** Teilen eines Pakets (21) in die Vielzahl von Fragmente (1 to n).

7. Energiesparverfahren nach Anspruch 6, ferner **gekennzeichnet durch** Senden der Vielzahl von Fragmente (1 bis n) an einen Einzelpaket-Mediumzugriffskontroll-Zwischenspeicher (MAC) (40).

8. Energiesparverfahren nach Anspruch 7, ferner **gekennzeichnet durch** Senden der Vielzahl von Fragmente (1 bis n) vom Einzelpaket-Mediumzugriffskontroll-Zwischenspeicher (MAC) (40) an ein WLAN (26).

9. Energiesparverfahren nach Anspruch 1, ferner **dadurch gekennzeichnet, dass** die Vielzahl von Fragmente (1 bis n) Toninformationen umfasst.

10. Energiesparverfahren nach Anspruch 1, ferner **dadurch gekennzeichnet, dass** das drahtlose Kommunikationssystem (10, 26, 30) ein drahtloses IP-Phone ist.

11. Energiesparverfahren nach Anspruch 1, ferner **dadurch gekennzeichnet, dass** ein Verhältnis der vorbestimmten Zeit zum Intervall zwischen dem ersten Signalfeuer (b) und dem zweiten Signalfeuer (b) zwischen 0 und einschließlich 1 liegt.

12. Drahtloses Kommunikationssystem (10, 26, 30) mit einer Energiesparfunktion, wobei das drahtlose Kommunikationssystem (10, 26, 30) umfasst:
einen Zugangspunkt (AP1, AP2, 38) zum Senden einer Vielzahl von periodischen Signalfeuern (b) und zum Senden einer Vielzahl von Fragmenten (1 bis n), in welche in Paket unterteilt wurde, während eines Intervalls zwischen einem ersten Signalfeuer (b) und einem zweiten Signalfeuer (b) angrenzend an das erste Signalfeuer (b), wobei das erste Signalfeuer (b) eine Angabe über den Verkehr umfasst; und
eine Station (STA1, STA2, STA3, STA4, 32), die in einen drahtlosen lokalen Netzwerk verwendet wird, um das erste Signalfeuer (b) zu empfangen und um die Vielzahl von Fragmenten (1 bis n) zu anderen Zeitpunkten zu empfangen, nachdem das erste Signalfeuer empfangen wurde, wobei die Station (STA1, STA2, STA3, STA4, 32) **gekennzeichnet ist durch**:
einen Prozessor (36) zum Setzen eines MORE DATA BIT als aktiv und die Station (STA1, STA2, STA3, STA4, 32) befindet sich in einem aktiven Modus, wenn ein Zeitraum zwischen dem ersten Signalfeuer (b) und einem Fragment der Vielzahl von Fragmente (1 bis n), das von der Station (STA1, STA2, STA3, STA4, 32) nach dem ersten Signalfeuer (b) empfangen wurde, kürzer als ein vorbestimmter Zeitraum (140) ist, und zum Setzen eines MORE DATA BIT als inaktiv und die Station (STA1, STA2, STA3, STA4, 32) befindet sich in einem Energiesparmodus, wenn ein Zeitraum zwischen dem ersten Signalfeuer (b) und einem Fragment der Vielzahl von Fragmente (1 bis n), das von der Station (STA1, STA2, STA3, STA4, 32) nach dem ersten Signalfeuer empfangen wurde, nicht kürzer als der vorbestimmte Zeitraum (150) ist.

13. Drahtloses Kommunikationssystem (10, 26, 30) nach Anspruch 12, ferner **dadurch gekennzeichnet, dass** die Station (STA1, STA2, STA3, STA4, 32) ferner einen Sender (34) zum Senden eines Steuerpakets (120) Power Serve-Poll (PS-Poll) an den Zugangspunkt (AP1, AP2, 38) umfasst.

14. Drahtloses Kommunikationssystem (10, 26, 30) nach Anspruch 13, ferner **dadurch gekennzeichnet, dass** der Zugangspunkt (AP1, AP2, 38) ferner eine Logikeinheit (42) zum Erkennen des Steuerpakets (130) Power Serve-Poll (PS-Poll) umfasst.

15. Drahtloses Kommunikationssystem (10, 26, 30) nach Anspruch 13, ferner **dadurch gekennzeichnet, dass** der Zugangspunkt (AP1, AP2, 38) ferner zum Senden eines Zwischenspeicherpakets (130) verwendet wird.

16. Drahtloses Kommunikationssystem (10, 26, 30) nach Anspruch 12, ferner **dadurch gekennzeichnet, dass** der Zugangspunkt (AP1, AP2, 38) ferner eine Paketteilungseinheit (44) zum Teilen eines Pakets (21) in die Vielzahl von Fragmente (1 bis n) umfasst.

17. Drahtloses Kommunikationssystem (10, 26, 30) nach Anspruch 16, ferner **dadurch gekennzeichnet, dass** der Zugangspunkt (AP1, AP2, 38) ferner einen Einzelpaket-Mediumzugriffskontroll-Zwischenspeicher (MAC) (40) zum Speichern der Vielzahl von Fragmente (1 bis n) umfasst.

## Revendications

1. Procédé d'économie d'énergie pour une station (STA1, STA2, STA3, STA4, 32) utilisée dans un réseau local sans fil (10, 26, 30) qui inclus un point d'accès (AP1, AP2, 38) transmettant une pluralité de fragments (1 à n) dans lequel un paquet a été divisé au niveau de la station (STA1, STA2, STA3, STA4, 32) au cours d'un intervalle qui est situé entre une première balise (b) et une seconde balise (b) adjacente à la première balise (b), dans lequel les balises (b) sont transmises du point d'accès à la station, la station (32) recevant la pluralité de fragments (1 à n) à différents points dans le temps après réception de la première balise (b), le procédé d'économie d'énergie étant **caractérisé par** l'étape consistant à :
lorsqu'une période entre la première balise (b) et un fragment de la pluralité de fragments (1 à n) reçue par la station (STA1, STA2, STA3, STA4, 32) postérieurement à la première balise (b) est inférieure à un temps prédéterminé, établir un chaînage de données « MORE DATA BIT » en tant qu'actif et la station (STA1, STA2, STA3, STA4, 32) est en mode actif (140) ; et
lorsqu'une période entre la première balise (b) et un fragment de la pluralité de fragments (1 à n) reçue par la station (STA1, STA2, STA3, STA4, 32) postérieurement à la première balise (b) n'est pas inférieure à un temps prédéterminé, établir le chaînage de données « MORE DATA BIT » en tant qu'inactif et la station (STA1, STA2, STA3, STA4, 32) est en mode d'économie d'énergie (150).

2. Procédé d'économie d'énergie selon la revendication 1, en outre **caractérisé par** l'étape consistant à indiquer au point d'accès (AP1, AP2, 38) que la station (STA1, STA2, STA3, STA4, 32) est en mode d'économie d'énergie.

3. Procédé d'économie d'énergie selon la revendication 1, en outre **caractérisé en ce que** le point d'accès (AP1, AP2, 38) délivre une indication de trafic (120) à la station (STA1, STA2, STA3, STA4, 32) par l'intermédiaire de la première balise (b).

4. Procédé d'économie d'énergie selon la revendication 1, en outre **caractérisé en ce que** la station (STA1, STA2, STA3, STA4, 32) délivre un paquet de commande de trame d'économie d'énergie (PS-POLL) (130) au point d'accès (AP1, AP2, 38).

5. Procédé d'économie d'énergie selon la revendication 4, en outre **caractérisé en ce que** le point d'accès (AP1, AP2, 38) identifie le paquet de commande de trame d'économie d'énergie (PS-POLL) et transmet un paquet tampon (130) à la station (STA1, STA2, STA3, STA4, 32).

6. Procédé d'économie d'énergie selon la revendication 1, en outre **caractérisé par** l'étape consistant à diviser un paquet (21) en la pluralité de fragments (1 à n).

7. Procédé d'économie d'énergie selon la revendication 6, en outre **caractérisé par** l'étape consistant à transmettre la pluralité de fragments (1 à n) à un tampon de contrôle d'accès au support (MAC) de paquet unique (40).

8. Procédé d'économie d'énergie selon la revendication 7, en outre **caractérisé par** l'étape consistant à transmettre la pluralité de fragments (1 à n) à un réseau local sans fil (WLAN) (26) à partir du tampon de contrôle d'accès au support (MAC) de paquet unique (40).

9. Procédé d'économie d'énergie selon la revendication 1, en outre **caractérisé en ce que** la pluralité de fragments (1 à n) comporte des informations audio.

10. Procédé d'économie d'énergie selon la revendication 1, en outre **caractérisé en ce que** le système de communication sans fil (10, 26, 30) est un téléphone IP sans fil.

11. Procédé d'économie d'énergie selon la revendication 1, en outre **caractérisé en ce qu'**un rapport du temps prédéterminé sur l'intervalle entre la première balise (b) et la seconde balise (b) se situe entre 0 et 1 inclus.

12. Système de communication sans fil (10, 26, 30) avec une fonction d'économie d'énergie, le système de communication sans fil (10, 26, 30) comportant :
un point d'accès (AP1, AP2, 38) pour transmettre une pluralité de balises périodiques (b) et pour transmettre une pluralité de fragments (1 à n) dans lequel un paquet a été divisé au cours d'un intervalle entre une première balise (b) et une seconde balise (b) adjacente à la première balise (b), la première balise (b) comportant une indication de trafic ; et
une station (STA1, STA2, STA3, STA4, 32) utilisée dans un réseau local sans fil en vue de recevoir la première balise (b) et de recevoir la pluralité de fragments (1 à n) à différents points dans le temps après que la première balise (b) a été reçue, la station (STA1, STA2, STA3, STA4, 32) est
**caractérisé par**
un processeur (36) pour établir un chaînage de données « MORE DATA BIT » en tant qu'actif et la station (STA1, STA2, STA3, STA4, 32) est en mode actif si une période entre la première balise (b) et un fragment de la pluralité de fragments (1 à n) reçue par la station (STA1, STA2, STA3, STA4, 32) postérieurement à la première balise (b) est inférieure à un temps prédéterminé (140), et pour établir un chaînage de données « MORE DATA BIT » en tant qu'inactif et la station (STA1, STA2, STA3, STA4, 32) est en mode d'économie d'énergie si une période entre la première balise (b) et un fragment de la pluralité de fragments (1 à n) reçue par la station (STA1, STA2, STA3, STA4, 32) postérieurement à la première balise n'est pas inférieure au temps prédéterminé (150).

13. Système de communication sans fil (10, 26, 30) selon la revendication 12, en outre **caractérisé en ce que** la station (STA1, STA2, STA3, STA4, 32) comporte en outre un émetteur (34) pour transmettre un paquet de commande de trame d'économie d'énergie (PS-POLL) (120) au point d'accès (AP1, AP2, 38).

14. Système de communication sans fil (10, 26, 30) selon la revendication 13, en outre **caractérisé en ce que** le point d'accès (AP1, AP2, 38) comporte en outre une unité logique (42) en vue d'identifier le paquet de commande de trame d'économie d'énergie (PS-POLL) (130).

15. Système de communication sans fil (10, 26, 30) selon la revendication 13, en outre **caractérisé en ce que** le point d'accès (AP1, AP2, 38) est en outre utilisé pour transmettre un paquet tampon (130).

16. Système de communication sans fil (10, 26, 30) selon la revendication 12, en outre **caractérisé en ce que** le point d'accès (AP1, AP2, 38) comporte en outre une unité de division de paquets (44) pour diviser un paquet (21) en une pluralité de fragments (1 à n).

17. Système de communication sans fil (10, 26, 30) selon la revendication 16, en outre **caractérisé en ce que** le point d'accès (AP1, AP2, 38) comporte en outre un tampon de contrôle d'accès au support (MAC) de paquet unique (40) pour stocker la pluralité de fragments (1 à n).
